# EUROPEAN PATENT SPECIFICATION

(11) **EP 3 434 456 B1**
(45) Date of publication and mention of the grant of the patent: **05.05.2021**
(21) Application number: 18185896.0
(22) Date of filing: 26.07.2018
(51) Int. Cl.: B29C 69/00, B65B 7/16, B65B 41/16, B65B 3/04, B65B 61/06, B29L 31/00, B29C 65/78, B29C 65/02, A24D 3/06

(54) **METHOD AND MANUFACTURING MACHINE FOR THE PRODUCTION OF CAPSULES FOR SMOKING ARTICLES, IN PARTICULAR FOR FILTERS, DESIGNED TO CONTAIN A LIQUID TO BE USED IN THE COOLING OF THE SMOKE**
VERFAHREN UND FERTIGUNGSMASCHINE ZUR HERSTELLUNG VON KAPSELN FÜR RAUCHARTIKEL, INSBESONDERE FÜR FILTER, DIE DAFÜR KONZIPIERT SIND, EINE FLÜSSIGKEIT ZUR KÜHLUNG DES RAUCHS AUFZUNEHMEN
PROCÉDÉ ET MACHINE DE PRODUCTION DE CAPSULES POUR ARTICLES À FUMER, NOTAMMENT POUR DES FILTRES, CONÇUES POUR CONTENIR UN LIQUIDE DESTINÉ À ÊTRE UTILISÉ DANS LE REFROIDISSEMENT DE LA FUMÉE

(30) Priority: 26.07.2017 IT 201700085424
(43) Date of publication of application: 30.01.2019
(73) Proprietor: G.D SOCIETA' PER AZIONI, 40133 Bologna (IT)
(72) Inventor: PARAZZA, Davide, 40133 Bologna (IT); MALDOTTI, Sergio, 44123 Ferrara (IT); FERRARI, Michele, 40064 Ozzano Dell' Emilia (BO) (IT); BRIZZI, Alessandro, 40056 Crespellano (BO) (IT); FEDERICI, Luca, 40135 Bologna (IT)
(74) Representative: Musconi, Roberta

(56) References cited:
- JP-A- H05 330 503
- JP-B2- 3 685 472

## Description

### TECHNICAL FIELD

The present invention relates to a method and to a manufacturing machine for the production of capsules for smoking articles, in particular for filters, designed to contain a liquid to be used in the cooling of the smoke.

### PRIOR ART

Recently, the use of capsules for smoking articles has been proposed, in particular for filters, designed to contain a liquid to be used in the cooling of the smoke.

In particular, the capsules are designed to contain water or a mixture of water and a flavour.

Typically, said capsules comprise a cup-shaped body preferably made in one piece, for example made of a plastic material, defined by a tubular side wall and, at one end, by a bottom wall or bottom element. The side wall has a longitudinal axis and delimits, with the bottom element, a compartment which is adapted to contain a predetermined amount of liquid. The side wall can be provided with a plurality of ribs which extend in a cantilever fashion from the outer surface of the side wall, extend over the entire length of the side wall itself and are uniformly distributed around the longitudinal axis.

The bottom wall is connected at a given height of the side wall and the connection between the bottom wall and the inner surface of the side wall is made by means of a weakened profile so as to allow, in use, the breaking under the action of a force imparted from the outside in order to pour out the liquid contained inside the compartment.

The compartment is open at the top and is closed by a cover conveniently formed by film a or a wrap made of PET/PE. The capsule can also comprise a collar i.e. an annular flange, which extends in a cantilever fashion from the end of the side wall opposite the bottom wall and is arranged on a plane orthogonal to said longitudinal axis.

Alternatively, capsules are known which comprise a cup-shaped body preferably made in one piece, for example made of a plastic material, defined by a tubular side wall and, at one end, by a bottom element having a central portion of a polygonal shape, for example hexagonal. In this case, the side wall has a polygonal shape in plan; in particular, the side wall has a hexagonal shape in plan, in which six side wall portions are connected to each other by means of six connecting sections. The connecting sections are internally weakened so as to allow, in use, to deform under the action of a force imparted from the outside by the user to pour out the liquid contained inside the compartment. Furthermore, the capsule can comprise a collar, i.e. an annular flange, which extends in a cantilever fashion from the end of the side wall opposite the bottom wall and is arranged on a plane orthogonal to said longitudinal axis.

Capsules for smoking articles of the type described above have small dimensions, of the order of one centimetre.

Typically, said capsules are produced by means of a manufacturing machine in which the capsules travel through a forming path via a moulding station of the cup-shaped body, a control station for the cup-shaped bodies which are obtained by moulding, a filling station with the liquid and a subsequent cutting station of the covering elements and a subsequent welding station of the covering elements to the cup-shaped bodies.

Within the production process, the cutting step of the covering elements and the subsequent welding step of the covering elements to the cup-shaped bodies are extremely delicate considering the very small dimensions of the covering elements; it has, in fact, been verified that the desired productivity cannot be obtained with a satisfactory level of efficiency and without compromising the welding quality of the covering elements to the cup-shaped bodies.

JP-3685472-B2 discloses a manufacturing machine to seal a cover material on containers and to convey the cover material without applying too much force; and JP-H05330503-A discloses an apparatus to correct a defect of unsatisfactory welding to a sheet that occurs to short-statured cylindrical containers when lids are welded to the cylindrical containers.

### DESCRIPTION OF THE INVENTION

The object of the present invention is to provide a manufacturing machine for the production of capsules for smoking articles, in particular for filters, designed to contain a liquid to be used in the cooling of smoke which is free from the drawbacks of the state of the art and, at the same time, is simple and inexpensive to implement.

Another object of the present invention is to provide a method for the production of capsules for smoking articles, in particular for filters, designed to contain a liquid to be used in the cooling of smoke which is free from the drawbacks of the state of the art and, at the same time, is simple and inexpensive to implement.

According to the present invention, a method and a manufacturing machine are provided for the production of capsules for smoking articles, in particular for filters, designed to contain a liquid to be used in the cooling of smoke, as claimed in the appended claims.

### BRIEF DESCRIPTION OF THE DRAWINGS

The present invention will now be described with reference to the attached drawings, which illustrate some non-limiting embodiments thereof, wherein:
- Figures 1a to 1c respectively illustrate a perspective view, from below and in section, along the line c-c of a capsule made by the manufacturing machine which is the object of the present invention;
- Figure 2 is a block diagram that illustrates the method for the production of the capsules of Figures 1a-1c;
- Figure 3 is a perspective view of a manufacturing machine made according to the present invention;
- Figure 4 is a front view of a welding station and of a cutting station of the manufacturing machine of Figure 3;
- Figure 4A is an enlarged front view in section of the detail A of Figure 4, wherein some parts have been removed to better highlight others; and
- Figure 5 is a further front view of the welding station and of the cutting station of Figure 4.

### PREFERRED EMBODIMENTS OF THE INVENTION

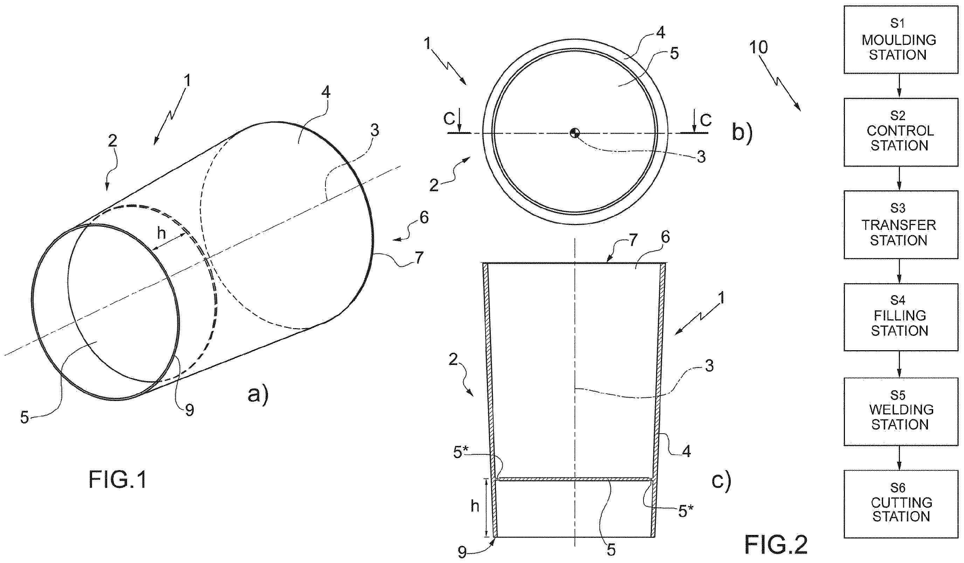

In Figure 1, number 1 denotes as a whole a capsule 1 for smoking articles, in particular for filters, designed to contain a liquid to be used in the cooling of smoke. In particular, the capsule 1 is designed to contain water or a mixture of water and a flavour.

The capsule 1 comprises a cup-shaped body 2 preferably made in one piece, for example made of plastic material, defined by a tubular side wall 4 and, at one end, by a circular bottom wall 5 or bottom element. The cup-shaped body 2 has a shape slightly tapered towards the bottom wall 5. Alternatively, the cup-shaped body 2 has a substantially cylindrical shape. The side wall 4 has a longitudinal axis 3 and delimits, with the bottom wall 5, a compartment 6, which is adapted to contain a predetermined amount of liquid. The side wall 4 has a circular shape in plan. According to a preferred alternative, the side wall 4 is provided with a plurality of ribs (not illustrated) which extend in a cantilever fashion from the outer surface of the side wall 4, extend over the entire length of the side wall 4 and are uniformly distributed around the longitudinal axis 3.

According to what is better illustrated in Figure 1c, the bottom wall 5 is connected at a height h of the side wall 4. In other words, the bottom wall 5 is not arranged flush with the lower edge 9 of the side wall 4 but fits at a height h with respect to said lower edge 9.

The connection between the bottom wall 5 and the inner surface of the side wall 4 is obtained by means of a weakened profile 5* (of reduced thickness) to allow, in use, the breakage under the action of a force imparted from the outside in order to pour out the liquid contained inside the compartment 6. The compartment 6 is open at the top and is closed by a cover 7 conveniently formed by a film or a wrap made of PET/PE. The capsule 1 comprises, furthermore, a collar defined by the upper surface of the side wall 4 to which the cover 7 is connected. Alternatively, the capsule 1 comprises a collar defined by an annular flange (not illustrated), which extends in a cantilever fashion from the end of the side wall 4 opposite the bottom wall 5 and is arranged on a plane orthogonal to said longitudinal axis 3.

In Figure 2 number 10 denotes, as a whole, a manufacturing machine for the production of the capsules 1 for smoking articles described above, which travel a forming path via a moulding station S1 of the semi-finished capsules 1 and, in particular, of the cup-shaped bodies 2, one or more check and control stations S2 for the collars and for the bottom walls 5, a transfer station S3 for transferring the cup-shaped bodies 2 into trays 9, a filling station S4 for filling the cup-shaped bodies 2 with the liquid, a welding station S5 for welding a strip 14 of plastic material to the cup-shaped bodies 2 and a cutting station S6 for cutting the strip 14 of plastic material so as to obtain the covering elements 7 welded to the respective cup-shaped bodies 2.

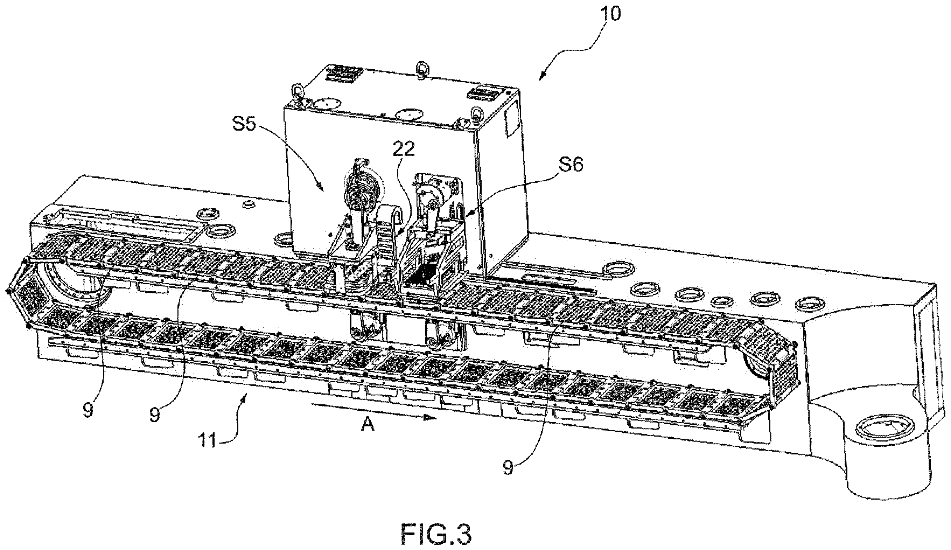

In particular, as better illustrated in Figure 3, the manufacturing machine 10 comprises a feeding system 11 which develops along a closed loop working path and comprises the filling station S4 with the liquid (not illustrated), the welding station S5 to weld a strip 14 of plastic material to the cup-shaped bodies 2 and the cutting station S6 of the strip 14 of plastic material to obtain the covering elements 7, welded to the respective cup-shaped bodies 2, arranged along said feeding system 11.

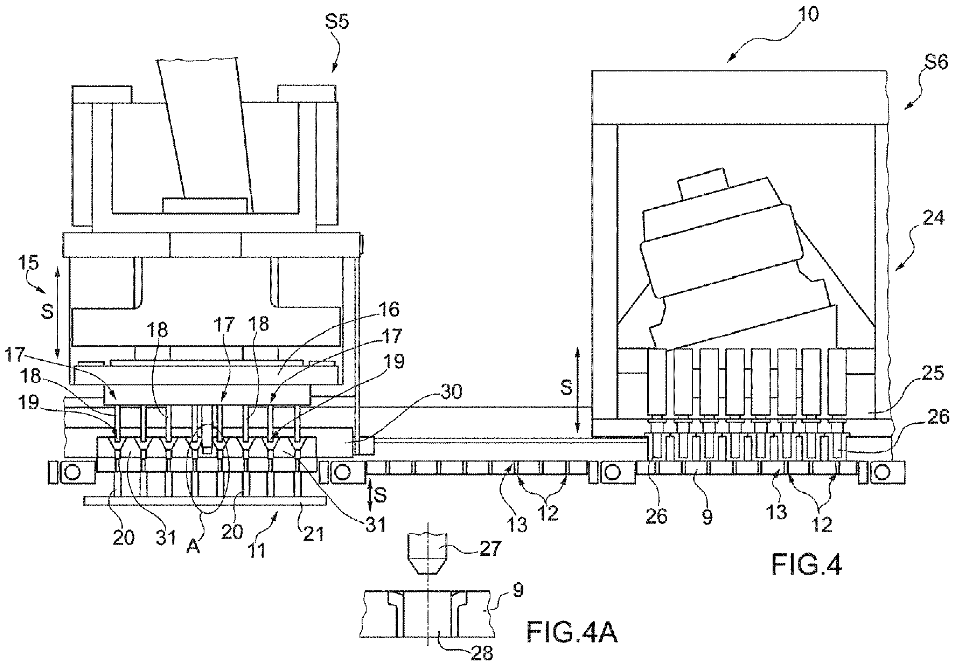

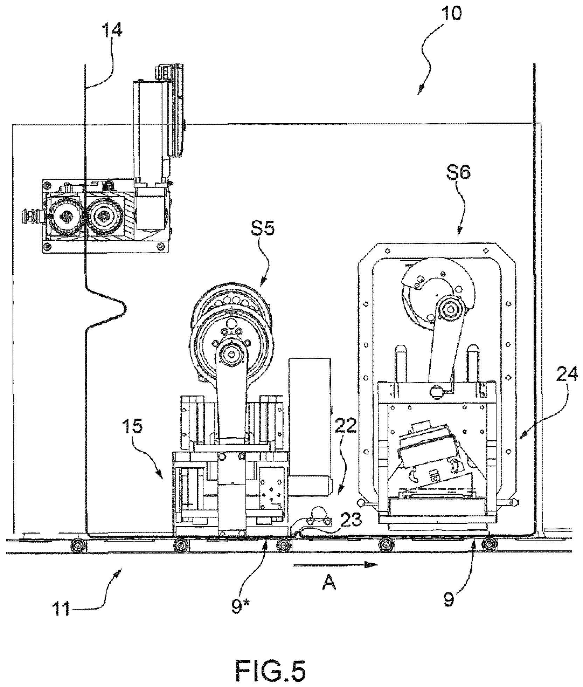

According to what is illustrated in Figures 4 and 5, the feeding system 11 is made by means of a conveyor 11 which receives the cup-shaped bodies 2 exiting the transfer station S3, and feeds them with an intermittent motion along the feeding direction A into the trays 9. The trays 9 have a plurality of pockets 12, each designed to receive and house a respective cup-shaped body 2; the pockets 12 are typically divided into several rows equidistant from each other and distributed over the entire available surface of the tray 9. For example, in each tray 9 ninety-six pockets 12 are obtained, divided into eight rows of twelve pockets 12 each.

According to a preferred alternative, the pockets 12 are open at the bottom; in other words, each pocket 12 is defined by a through cavity obtained in the tray 9 and is delimited by an inner surface 13 coaxial with an axis (visible in Figure 4).

Furthermore, each tray 9 comprises at least one hole 28 (illustrated in Figure 4a) made for centring the tray 9 at least at the welding station S5 and at the cutting station S6. Once the filling with the liquid has been completed, the trays 9 containing the cup-shaped bodies 2 are fed to the welding station S5.

The welding station S5 comprises a welding unit 15 made through a support 16 movable in the vertical direction S provided with a plurality of striker heads 17. Each striker head 17 comprises a body 18 that longitudinally develops along a vertical axis and comprises an end arranged to contact/strike against a portion of the strip 14 of plastic material. The arrangement of the striker heads 17 reproduces the arrangement of the pockets 12 in the trays 9. In particular, the movable support 16 comprises ninety-six striker heads 17 divided into eight rows of twelve striker heads 17 each.

Moreover, the movable support 16 carries at least one centring pin 27 connected thereto (illustrated in Figure 4a and having a longitudinal development parallel to the development of the striker heads 17) which engages in the respective hole 28 obtained in each tray 9; in particular, the centring pin 27 is engaged in a corresponding hole 28 whenever the striker heads 17 contact the portion of the strip 14 of plastic material.

Each striker head 17 cooperates with a respective striker element 20 for lifting the cup-shaped bodies 2 towards the striker head 17. The striker elements 20 are connected to a common support 21, which is also movable along the vertical direction S. Clearly, also the arrangement of the striker elements 20 reproduces the arrangement of the pockets 12 in the trays 9 and of the striker heads 17. In particular, the support 21 comprises ninety-six striker elements 20 divided into eight rows of twelve striker elements 20 each.

Each striker head 17 cooperates with a respective welder 31, for example a sonotrode, so as to obtain the welding of the portion of the strip 14 of plastic material to the cup-shaped body 2, for example by means of ultrasound. Each welder 31 is cooperating with a respective assembly formed by the striker head 17 and by the respective striker element 20. The welders 31 are carried by a common support element 30, also movable in the vertical direction S, provided with a plurality of welders 31.

The arrangement of the welders 31 thus reproduces the arrangement of the pockets 12 in the trays 9. In particular, the support element 30 comprises ninety-six welders 31 divided into eight rows of twelve welders 31 each.

In an alternative embodiment, not illustrated, the welding station S5 can provide for the striker heads 17 may provide suction. In said case, the welding station S5 can comprise a suction circuit made by means of a sucking pump which is connected to each striker head 17 by means of a respective suction duct so as to place each striker head 17 in communication with the sucking pump.

The movement of the movable support 16 and of the common support 21 is directly controlled by suitable actuation means (of a known type and not described in detail).

During the welding process, the following steps occur in succession:
- the conveyor 11 transports the tray 9 along the feeding direction A and stops it at the welding station S5 below the welding unit 15;
- the strip 14 of plastic material is fed with an intermittent motion in a direction parallel to the feeding direction A and is interposed between the welding unit 15 and the trays 9;
- the movable support 16 is moved along the vertical direction S downwards, until each striker head 17 is arranged facing and near a respective cup-shaped body 2 with the interposition of the strip 14 of plastic material (the centring pin 27 engages in the hole 28 of the tray 9 arranged at the welding station S5) ;

- the support 21 is actuated and moved upwards along the vertical direction S so that each striker element 20 intercepts a respective cup-shaped body 2 and lifts it slightly until the cup-shaped body 2 and the corresponding portion of the strip 14 of plastic material are arranged in substantial contact with one another (they could be placed in contact or close to each other);
- the support element 30 that carries the welders 31 connected thereto, is moved along the vertical direction S downwards (said step can be carried out simultaneously with the downwards movement of the movable support 16);
- the support elements denoted with 16 and 21 are moved (of the same length) along the vertical direction S upwards until a welder 31 strikes against the respective portion of the strip 14 of plastic material and the actual welding is carried out;
- the support 21 is actuated and moved downwards along the vertical direction S; similarly, the movable support 16 is actuated and moved downwards along the vertical direction S so that each striker head 17 accompanies (by pushing) the individual capsules 1 inside the pockets 12 of the tray 9 which is then moved towards the subsequent cutting station S6 to cut the strip 14 of plastic material.

In the case in which the striker heads 17 provide suction, the method furthermore provides for the step of activating the suction circuit so that each striker head 17 holds a corresponding portion of the strip 14 of plastic material. It is evident that the feed speed of the trays 9 on the conveyor 11 is approximately equal to the feeding speed of the strip 14 of plastic material.

Once the strip 14 of plastic material has been welded to the cup-shaped bodies 2, the tray 9 is again conveyed along the feeding direction A until it stops at the cutting station S6 of the covering elements 7 welded to the cup-shaped bodies 2 while a new tray 9* is fed to the welding station S5.

According to what is better illustrated in Figure 5, between the welding station S5 and the cutting station S6 of the strip 14 of plastic material, a dragging device 22 is interposed, for the strip 14, designed to obtain a loop 23 of plastic material. In particular, the dragging device 22 is arranged close to the output of the welding unit 15.

In detail, the dragging device 22 can comprise, for example, a pair of grippers or can preferably be of suction type. In said preferred embodiment, the dragging device 22 comprises a sucking pump (not illustrated) which is connected to a sucking head of a support element by means of a respective suction duct so as to place said sucking head in communication with the sucking pump.

The accumulation of plastic material obtained by forming the loop 23 allows for the independence of two successive trays 9, 9* (there may also be other trays 9 interposed between them, preferably a single tray 9 is interposed between them), of which a tray 9* is intended to be subjected to the welding step in the area of the welding station S5 and a tray 9 is intended to be subjected to the cutting step in the area of the cutting station S6.

In detail, in order to obtain the loop 23 and make the two successive trays 9, 9* independent, after the tray 9 has been arranged at the cutting station S6 and the tray 9* has been arranged at the welding station S5, the strip 14 of plastic material is further dragged by the dragging device 22 in the same feeding direction of the trays 9, 9* thus forming the loop 23.

In use, immediately before the tray 9* is subjected to the welding step and the tray 9 is subjected to the cutting step, the dragging device 22 is actuated so as to lift and drag a portion of the strip 14 of plastic material and obtain the loop 23. The loop 23 makes it possible to create an inter-operational buffer between the welding station S5 and the cutting station S6 which makes it possible to obtain movements of the trays 9 downstream of the loop 23 with respect to the trays 9* upstream of the loop 23.

According to what is better illustrated in Figure 4, the cutting station S6 comprises a cutting member 24 obtained by means of a support 25 provided with a plurality of cutting heads 26, preferably rotating, made as cylindrical bodies parallel to each other and provided, at one end, with a respective sharp edge. The arrangement of the cutting heads 25 reproduces the arrangement of the pockets 12 in the trays 9. In particular, the support 25 comprises ninety-six cutting heads 26 divided into eight rows of twelve cutting heads 26 each.

The support 25 is movable between two positions along the vertical direction S. In particular, the support 25 is movable between a raised position and a lowered cutting position in which the strip 14 of plastic material is intercepted so as to obtain the individual covering elements 7 already welded to the respective cup-shaped bodies 2, and vice versa. The movement of the support 25 is directly controlled by suitable actuation means. In detail, similarly to the welding station S5, also the cutting station S6 comprises at least one centring pin (not illustrated) carried by the support 25 and intended to engage in the respective hole 28 of a tray 9 arranged at the cutting station S6. Therefore, the fact of obtaining the loop 23 between the trays 9, 9* makes it possible to engage the centring pins in the respective holes 28 of the trays 9, 9* as they are independent (the loop 23 allows to make possible a relative movement between the trays 9, 9*).

In use, the support 25 is moved along the vertical direction S downward until it reaches the lowered cutting position in which each cutting head 26 is arranged facing and near a respective semi-finished capsule 1 (and the centring pin is engaged in the hole 28 of the tray 9) ; once the circular cut on the strip 14 of plastic material is made, so as to obtain for each cutting head 26 a respective covering element 7 already welded to the respective cup-shaped bodies 2, the support 25 is again actuated and moved upwards along the vertical direction S until being arranged in the raised position. The tray 9 is then moved to the outlet by the manufacturing machine 10.

Upon leaving the cutting station S6, after having obtained the covering elements 7, the waste of the strip 14 of plastic material is rewound onto a reel by means of a plurality of return rollers or, alternatively, the waste of the strip 16 of plastic material it is shredded.

The manufacturing machine 10 described up to now has various advantages. In particular, it allows the handling of small components such as the cup-shaped bodies 2 and the covering elements 7, while ensuring good performance in terms of productivity and without compromising the quality of the welding of the covering elements 7 to the respective cup-shaped bodies 2.

## Claims

1. A manufacturing machine (10) for the production of capsules (1) for smoking articles, in particular for filters, designed to contain a liquid to be used in the cooling of smoke; wherein each capsule (1) comprises a cup-shaped body (2) defined by a side wall (4) and, at one end, by a bottom wall (5); the side wall (4) has a longitudinal axis (3) and delimits, with the bottom wall (5), a compartment (6), which is designed to contain a predetermined amount of liquid; the capsule (1) comprising a covering element (7), which is coupled to a portion of the side wall (4) defining a collar at the end opposite the bottom wall (5); the manufacturing machine (10) comprises:
a feeding system (11) that feeds the semi-finished capsules (1) along a forming path;
a number of operating stations (S4, S5, S6), which are arranged along the forming path and comprise a welding station (S5) for welding a strip (14) of plastic material to a plurality of cup-shaped bodies (2);
a cutting station (S6) for cutting the strip (14) of plastic material welded to the cup-shaped bodies (2) so as to obtain the covering elements (7), wherein the cutting station (S6) is arranged downstream of the welding station (S5); and
a dragging device (22) for the strip (14) of plastic material which is interposed between the welding station (S5) and the cutting station (S6) and is realized to obtain, by dragging the strip (14) of plastic material, a loop (23) of plastic material that allows two groups of semi-finished capsules (1) to be independent, wherein a first group of semi-finished capsules (1) is arranged at the welding station (S5) and a second group of semi-finished capsules (1) is arranged at the cutting station (S6)
wherein the dragging device (22) is of the suction type and comprises a sucking pump, which is connected to a sucking head of a support element by means of a respective suction duct, so as to establish a communication between said sucking head and the sucking pump.

2. The machine according to claim 1, wherein the dragging device (22) is arranged close to the output of a welding unit (15) of the welding station (S5) and upstream of the cutting station (S6).

3. The machine according to anyone of the preceding claims, wherein the cutting station (S6) comprises a cutting member (24) provided, in turn, with a first support (25), which is movable along a substantially vertical direction (S) and carries a plurality of cutting elements (26) connected thereto; the arrangement of said cutting elements (26) reproduces the arrangement of the second group of semi-finished capsules (1), so that each cutting element (26) produces a respective covering element (7) already welded to the respective cup-shaped body (2).

4. The machine according to anyone of the preceding claims, wherein the semi-finished capsules (1) are housed inside respective pockets (12) of the feeding system (11); each of said pockets (12) contains a respective cup-shaped body (2) and is defined by a through cavity which is delimited by an inner surface (13).

5. The machine according to claim 4, wherein the pockets (12) are obtained in trays (9), which are fed by the feeding system (11) along the forming path.

6. The machine according to anyone of the preceding claims, wherein the welding station (S5) comprises a welding unit (15) that is obtained through a second support (30) which is movable along a substantially vertical direction (S) and is provided with a plurality of welders (31) so as to simultaneously weld the strip (14) of plastic material to a plurality of cup-shaped bodies (2).

7. The machine according to claim 6, wherein the welding unit (15) comprises a third support (16) which is movable along a substantially vertical direction (S) and is provided with a plurality of heads (17) for striking the strip (14) of plastic material, wherein each head (17) comprises a body (18), that longitudinally develops and cooperates with a respective welder (31).

8. The machine according to claim 7, wherein each head (17) cooperates with a respective striker (20) to lift the cup-shaped bodies (2); wherein the strikers (20) are connected to a fourth common support (21), which is also movable along the substantially vertical direction (S).

9. A method for the production of capsules (1) for smoking articles, in particular for filters, designed to contain a liquid to be used in the cooling of smoke; wherein each capsule (1) comprises a cup-shaped body (2) defined by a side wall (4) and, at one end, by a bottom wall (5); the side wall (4) has a longitudinal axis (3) and delimits, with the bottom wall (5), a compartment (6) which is designed to contain a predetermined amount of liquid; the capsule (1) comprising a covering element (7), which is coupled to a portion of the side wall (4) defining a collar at the end opposite the bottom wall (5); the method comprises:
a step of feeding the cup-shaped bodies (2) along a feeding direction (A) inside respective pockets (12) of a feeding system (11);
a step of feeding a strip (14) of plastic material along a direction parallel to the feeding direction (A);
a step of welding the strip (14) of plastic material to a plurality of cup-shaped bodies (2); and
following the welding step, a step of cutting the strip (14) of plastic material so as to obtain the covering elements (7) already welded to the cup-shaped bodies (2);
the method is **characterized in that** it comprises a further step, by dragging the strip (14) of plastic material a loop (23) of plastic material is obtained which allows two groups of semi-finished capsules (1) to be independent, wherein a first group of semi-finished capsules (1) being intended to be subjected to the welding step and a second group of semi-finished capsules (1) being intended to be subjected to the cutting step.

10. The method according to claim 9 wherein the step of obtaining the loop (23) of plastic material involves dragging the strip (14) of plastic material by means of suction.

## Patentansprüche

1. Herstellungsmaschine (10) für die Produktion von Kapseln (1) für Raucherzeugnisse, insbesondere für Filter, die ausgelegt sind, eine bei dem Kühlen des Rauchs zu verwendende Flüssigkeit zu enthalten, wobei jede Kapsel (1) einen becherförmigen Körper (2) umfasst, der durch eine Seitenwand (4) und an einem Ende durch eine Bodenwand (5) definiert ist; wobei die Seitenwand (4) eine Längsachse (3) aufweist und mit der Bodenwand (5) ein Fach (6) begrenzt, das ausgelegt ist, eine vorbestimmte Menge an Flüssigkeit zu enthalten; wobei die Kapsel (1) ein Abdeckelement (7) umfasst, das mit einem Abschnitt der Seitenwand (4) gekoppelt ist, der an dem Ende, das der Bodenwand (5) gegenüberliegt, einen Kragen definiert; wobei die Herstellungsmaschine (10) umfasst:
ein Zuführsystem (11), das die halbfertigen Kapseln (1) entlang eines Formungspfads zuführt;
eine Anzahl Arbeitsstationen (S4, S5, S6), die entlang des Formungspfads angeordnet sind und eine Schweißstation (S5) zum Schweißen eines Streifens (14) aus einem Kunststoffmaterial an mehrere becherförmige Körper (2) umfassen;
ein Schneidstation (S6) zum Schneiden des Streifens (14) aus einem Kunststoffmaterial, der an die becherförmigen Körper (2) geschweißt ist, um die Abdeckelemente (7) zu erhalten, wobei die Schneidstation (S6) stromabwärts der Schweißstation (S5) angeordnet ist; und
eine Zugvorrichtung (22) für den Streifen (14) aus einem Kunststoffmaterial, die zwischen der Schweißstation (S5) und der Schneidstation (S6) eingefügt ist und derart realisiert ist, durch Ziehen des Streifens (14) aus Kunststoffmaterial eine Schleife (23) aus Kunststoffmaterial zu erhalten, die es ermöglicht, dass zwei Gruppen halbfertiger Kapseln (1) unabhängig sind, wobei eine erste Gruppe halbfertiger Kapseln (1) an der Schweißstation (S5) angeordnet ist und eine zweite Gruppe halbfertiger Kapseln (1) an der Schneidstation (S6) angeordnet ist,
wobei die Zugvorrichtung (22) von dem Saugtyp ist und eine Saugpumpe umfasst, die mittels einer jeweiligen Saugleitung mit einem Saugkopf eines Trägerelements verbunden ist, um eine Verbindung zwischen dem Saugkopf und der Saugpumpe herzustellen.

2. Maschine nach Anspruch 1, wobei die Zugvorrichtung (22) nahe am Ausgang einer Schweißeinheit (15) der Schweißstation (S5) und stromaufwärts der Schneidstation (S6) angeordnet ist.

3. Maschine nach einem der vorhergehenden Ansprüche, wobei die Schneidstation (S6) ein Schneidelement (24) umfasst, das wiederum mit einem ersten Träger (25) versehen ist, der entlang einer im Wesentlichen vertikalen Richtung (S) bewegbar ist und mehrere Schneidelemente (26) trägt, die damit verbunden sind; wobei die Anordnung der Schneidelemente (26) die Anordnung der zweiten Gruppe halbfertiger Kapseln wiedergibt, derart, dass jedes Schneidelement (26) ein jeweiliges Abdeckelement (7) erzeugt, das bereits an den jeweiligen becherförmigen Körper (2) geschweißt ist.

4. Maschine nach einem der vorhergehenden Ansprüche, wobei die halbfertigen Kapseln (1) im Inneren jeweiliger Taschen (12) des Zuführsystems (11) aufgenommen sind; wobei jede der Taschen (12) einen jeweiligen becherförmigen Körper (2) enthält und durch einen Durchgangshohlraum, der durch eine Innenfläche (13) begrenzt ist, definiert ist.

5. Maschine nach Anspruch 4, wobei die Taschen (12) in Ablagen (9) erhalten werden, die durch das Zuführsystem (11) entlang des Formungspfads zugeführt werden.

6. Maschine nach einem der vorhergehenden Ansprüche, wobei die Schweißstation (S5) eine Schweißeinheit (15) umfasst, die durch einen zweiten Träger (30) erhalten wird, der entlang einer im Wesentlichen vertikalen Richtung (S) bewegbar ist und mit mehreren Schweißeinrichtungen (31) versehen ist, um den Streifen (14) aus einem Kunststoffmaterial gleichzeitig an mehrere becherförmige Körper (2) zu schweißen.

7. Maschine nach Anspruch 6, wobei die Schweißeinheit (15) einen dritten Träger (16) umfasst, der entlang einer im Wesentlichen vertikalen Richtung (S) bewegbar ist und mit mehreren Köpfen (17) zum Schlagen des Streifens (14) aus einem Kunststoffmaterial versehen ist, wobei jeder Kopf (17) einen Körper (18) umfasst, der sich in Längsrichtung erstreckt und mit einer jeweiligen Schweißeinrichtung (31) zusammenwirkt.

8. Maschine nach Anspruch 7, wobei jeder Kopf (17) mit einer jeweiligen Schlageinrichtung (20) zusammenwirkt, um die becherförmigen Körper (2) anzuheben; wobei die Schlageinrichtungen (20) mit einem vierten gemeinsamen Träger (21) verbunden sind, der ebenfalls entlang der im Wesentlichen vertikalen Richtung (S) bewegbar ist.

9. Verfahren für die Produktion von Kapseln (1) für Raucherzeugnisse, insbesondere für Filter, die ausgelegt sind, eine bei dem Kühlen von Rauch zu verwendende Flüssigkeit zu enthalten; wobei jede Kapsel (1) einen becherförmigen Körper (2) umfasst, der durch eine Seitenwand (4) und an einem Ende durch eine Bodenwand (5) definiert ist; wobei die Seitenwand (4) eine Längsachse (3) aufweist und mit der Bodenwand (5) ein Fach (6) begrenzt, das ausgelegt ist, eine vorbestimmte Menge an Flüssigkeit zu enthalten; wobei die Kapsel (1) ein Abdeckelement (7) umfasst, das mit einem Abschnitt der Seitenwand (4) gekoppelt ist, der an dem Ende, das der Bodenwand (5) gegenüberliegt, einen Kragen definiert; wobei das Verfahren umfasst:
einen Schritt des Zuführens der becherförmigen Körper (2) entlang einer Zuführrichtung (A) im Inneren jeweiliger Taschen (12) eines Zuführsystems (11);
einen Schritt des Zuführens eines Streifens (14) aus einem Kunststoffmaterial entlang einer Richtung, die zur Zuführrichtung (A) parallel ist;
einen Schritt des Schweißens des Streifens (14) aus einem Kunststoffmaterial an mehrere becherförmige Körper (2); und
auf den Schweißschritt folgend, einen Schritt des Schneidens des Streifens (14) aus einem Kunststoffmaterial, um die Abdeckelemente (7) zu erhalten, die bereits an die becherförmigen Körper (2) geschweißt sind;
wobei das Verfahren **dadurch gekennzeichnet ist, dass** es einen weiteren Schritt umfasst, in dem durch Ziehen des Streifens (14) aus Kunststoffmaterial eine Schleife (23) aus Kunststoffmaterial erhalten wird, die ermöglicht, dass zwei Gruppen halbfertiger Kapseln (1) unabhängig sind, wobei eine erste Gruppe halbfertiger Kapseln (1) dafür vorgesehen ist, dem Schweißschritt unterworfen zu werden, und eine zweite Gruppe halbfertiger Kapseln (1) dafür vorgesehen ist, dem Schneidschritt unterworfen zu werden.

10. Verfahren nach Anspruch 9, wobei der Schritt des Erhaltens der Schleife (23) aus Kunststoffmaterial das Ziehen des Streifens (14) aus Kunststoffmaterial mittels Saugen beinhaltet.

## Revendications

1. Machine de fabrication (10) pour la production de capsules (1) pour articles à fumer, en particulier pour filtres, conçues pour contenir un liquide à utiliser pour le refroidissement de la fumée ; où chaque capsule (1) comprend un corps en forme de coupelle (2) défini par une paroi latérale (4) et, à une extrémité, par une paroi inférieure (5) ; la paroi latérale (4) a un axe longitudinal (3) et délimite, avec la paroi inférieure (5), un compartiment (6) qui est conçu pour contenir une quantité prédéterminée de liquide ; la capsule (1) comprenant un élément de recouvrement (7) qui est couplé à une partie de la paroi latérale (4) définissant un collier au niveau de l'extrémité opposée à la paroi inférieure (5) ; la machine de fabrication (10) comprenant :
un système d'alimentation (11) qui fournit des capsules semi-finies (1) le long d'une trajectoire de formation ;
un certain nombre de stations opérationnelles (S4, S5, S6) qui sont agencées le long de la trajectoire de formation et comprennent une station de soudage (S5) pour souder une bande (14) de matière plastique à une pluralité de corps en forme de coupelle (2) ;
une station de coupe (S6) pour couper la bande (14) de matière plastique soudée aux corps en forme de coupelle (2) afin d'obtenir les éléments de recouvrement (7), où la station de coupe (S6) est agencée en aval de la station de soudage (S5) ; et
un dispositif de traînage (22) pour la bande (14) de matière plastique qui est intercalé entre la station de soudage (S5) et la station de coupe (S6) et est réalisé pour obtenir, en traînant la bande (14) de matière plastique, une boucle (23) de matière plastique qui permet à deux groupes de capsules semi-finies (1) d'être indépendants, où un premier groupe de capsules semi-finies (1) est agencé au niveau de la station de soudage (S5) et un second groupe de capsules semi-finies (1) est agencé au niveau de la station de coupe (S6),
dans laquelle le dispositif de traînage (22) est du type à aspiration et comprend une pompe d'aspiration qui est raccordée à une tête d'aspiration d'un élément de support au moyen d'un conduit d'aspiration respectif, afin d'établir une communication entre ladite tête d'aspiration et la pompe d'aspiration.

2. Machine selon la revendication 1, dans laquelle le dispositif de traînage (22) est agencé à proximité de la sortie d'une unité de soudage (15) de la station de soudage (S5) et en amont de la station de coupe (S6).

3. Machine selon l'une quelconque des revendications précédentes, dans laquelle la station de coupe (S6) comprend un organe de coupe (24) prévu, à son tour, avec un premier support (25) qui est mobile le long d'une direction sensiblement verticale (S) et porte une pluralité d'éléments de coupe (26) raccordés à ce dernier ; l'agencement desdits éléments de coupe (26) reproduit l'agencement du second groupe de capsules semi-finies (1), de sorte que chaque élément de coupe (26) produit un élément de recouvrement (7) respectif déjà soudé sur le corps en forme de coupelle (2) respectif.

4. Machine selon l'une quelconque des revendications précédentes, dans laquelle les capsules semi-finies (1) sont logées à l'intérieur de poches (12) respectives du système d'alimentation (11) ; chacune desdites poches (12) contient un corps en forme de coupelle (2) respectif et est définie par une cavité débouchante qui est délimitée par une surface interne (13).

5. Machine selon la revendication 4, dans laquelle les poches (12) sont obtenues dans des plateaux (9) qui sont alimentés par le système d'alimentation (11) le long de la trajectoire de formation.

6. Machine selon l'une quelconque des revendications précédentes, dans laquelle la station de soudage (S5) comprend une unité de soudage (15) qui est obtenue par le biais d'un deuxième support (30) qui est mobile le long d'une direction sensiblement verticale (S) et est prévue avec une pluralité de machines à souder (31) afin de souder simultanément la bande (14) de matière plastique sur une pluralité de corps en forme de coupelle (2).

7. Machine selon la revendication 6, dans laquelle l'unité de soudage (15) comprend un troisième support (16) qui est mobile le long d'une direction sensiblement verticale (S) et est prévu avec une pluralité de têtes (17) pour frapper la bande (14) de matière plastique, dans laquelle chaque tête (17) comprend un corps (18) qui se développe longitudinalement et coopère avec une machine à souder (31) respective.

8. Machine selon la revendication 7, dans laquelle chaque tête (17) coopère avec un percuteur (20) respectif pour lever les corps en forme de coupelle (2) ; dans laquelle les percuteurs (20) sont raccordés à un quatrième support (21) commun qui est également mobile le long de la direction sensiblement verticale (S).

9. Procédé pour la production de capsules (1) pour articles à fumer, en particulier pour filtres, conçues pour contenir un liquide à utiliser pour le refroidissement de la fumée ; où chaque capsule (1) comprend un corps en forme de coupelle (2) défini par une paroi latérale (4) et, à une extrémité, par une paroi inférieure (5) ; la paroi latérale (4) a un axe longitudinal (3) et délimite, avec la paroi inférieure (5), un compartiment (6) qui est conçu pour contenir une quantité prédéterminée de liquide ; la capsule (1) comprenant un élément de recouvrement (7) qui est couplé à une partie de la paroi latérale (4) définissant un collier au niveau de l'extrémité opposée à la paroi inférieure (5) ; le procédé comprenant :
une étape consistant à alimenter les corps en forme de coupelle (2) le long d'une direction d'alimentation (A) à l'intérieur de poches (12) respectives d'un système d'alimentation (11) ;
une étape consistant à alimenter une bande (14) de matière plastique le long d'une direction parallèle à la direction d'alimentation (A) ;
une étape consistant à souder la bande (14) de matière plastique sur une pluralité de corps en forme de coupelle (2) ; et
suite à l'étape de soudage, une étape consistant à couper la bande (14) de matière plastique afin d'obtenir les éléments de recouvrement (7) déjà soudés sur les corps en forme de coupelle (2) ;
le procédé étant **caractérisé en ce qu'**il comprend une étape supplémentaire, en traînant la bande (14) de matière plastique, une boucle (23) de matière plastique est obtenue qui permet à deux groupes de capsules semi-finies (1) d'être indépendants, où un premier groupe de capsules semi-finies (1) étant prévu pour être soumis à l'étape de soudage et un second groupe de capsules semi-finies (1) étant prévu pour être soumis à l'étape de coupe.

10. Procédé selon la revendication 9, dans lequel l'étape consistant à obtenir la boucle (23) de matière plastique implique l'étape consistant à traîner la bande (14) de matière plastique au moyen de l'aspiration.
